# EUROPÄISCHE PATENTANMELDUNG

(11) **EP 0 973 104 A1**
(43) Veröffentlichungstag der Anmeldung: **19.01.2000**
(21) Anmeldenummer: 98113411.7
(22) Anmeldetag: 17.07.1998
(51) Int. Cl.: G06F 17/30

(54) **Misserfolgsmeldung bei versuchtem Datenbankzugriff**

(71) Anmelder: SIEMENS AKTIENGESELLSCHAFT, 80333 München (DE)
(72) Erfinder: Junghans, Carl-Friedrich, 82178 Puchheim (DE)

(57) **Zusammenfassung**

Die Erfindung betrifft ein Verfahren zur Ausgabe einer Mißerfolgsmeldung bei einem versuchten Datenbankzugriff, wobei einem Datenbanksystem eine aus einer Mehrzahl von logisch verketteten Auswahlbedingungen zur Spezifizierung von Ausgabedaten zusammengesetzte Filterbedingung gestellt wird, wobei den Auswahlbedingungen jeweils ein Mißerfolgsgewicht zugeordnet wird und wobei bei der nicht erfüllten Filterbedingung die anhand eines Vergleichs der Mißerfolgsgewichte für den Mißerfolg wichtigste nicht erfüllte Auswahlbedingung ermittelt wird.

## Beschreibung

Die Erfindung betrifft ein Verfahren zur Ausgabe einer Mißerfolgsmeldung bei einem versuchten Zugriff auf Daten eines Datenbanksystems, wobei dem Datenbanksystem eine aus einer Mehrzahl von logisch verketteten Auswahlbedingungen zur Spezifizierung von Ausgabedaten zusammengesetzte Filterbedingung gestellt wird.

In diversen technischen Systemen, z.B. Fernmelde-Vermittlungsanlagen, können die Nutzer Anforderungen an das technische System richten, auf die das technische System reagiert. Dabei können insbesondere zwei Fälle eintreten. Im einen ist die gestellte Anforderung erfüllbar. Im anderen ist die gestellte Anforderung nicht erfüllbar. Weiterhin ist es möglich, daß die Anforderung eingeschränkt erfüllbar ist. Im Falle der nicht oder nur eingeschränkt erfüllbaren Anforderung wird vom technischen System die Angabe einer Mißerfolgsmeldung erwartet. Wenn bei einer wie oben beschriebenen Filterbedingung eine Mehrzahl von logisch verketteten Auswahlbedingungen gestellt wird, ist es möglich, daß mehrere der Auswahlbedingungen gleichzeitig nicht erfüllt sind. In diesem Fall ist es vorteilhaft, wenn das technische System eine geeignete Mißerfolgsmeldung ausgibt, anhand der der Nutzer geeignet reagieren kann, beispielsweise erneut Anforderungen stellen, die bisherigen Anforderungen modifizieren und/oder keine weiteren Anforderungen stellen kann. Je detaillierter der Nutzer über die Ursachen des Mißerfolgs informiert wird, desto genauer kann der Nutzer mit geeigneten Maßnahmen reagieren. Jedoch ist dabei auch zu berücksichtigen, daß die Mißerfolgsmeldung nicht zu umfangreich oder unübersichtlich ist, damit der Nutzer in angemessener Zeit reagieren kann.

Insbesondere im technischen Bereich der Breitband-Vermittlungssysteme erfährt die vorstehend umschriebene Problematik eine besondere Bedeutung, da hier einerseits sehr komplexe Mißerfolgsursachen auftreten können, andererseits der Nutzer auch eine Vielzahl von Reaktionsmöglichkeiten hat. Beispielsweise kann der Nutzer die für eine aufzubauende Verbindung zu spezifizierenden Eigenschaften im Detail vorgeben. Wird eine solche Nutzervorgabe von dem Vermittlungssystem zurückgewiesen, so ist ein möglichst informationsreicher und dennoch kurz gefaßter Hinweis darauf wünschenswert, wie die Vorgabe geändert werden kann.

Insbesondere derartige Breitband-Vermittlungssysteme enthalten Datenbanksysteme. Zur Bearbeitung der Nutzeranforderungen werden an das Datenbanksystem einmal oder mehrmals Abfragen gerichtet, mit denen versucht wird, auf Daten des Datenbanksystems zuzugreifen, d.h. solche Daten abzufragen. Unter den spezifizierten Auswahlbedingungen soll das Datenbanksystem daraufhin aus einer Anzahl von Daten oder Datensätzen die Daten bzw. Datensätze herausfiltern, bei denen die gestellten Auswahlbedingungen erfüllt sind. Werden Daten bzw. Datensätze mit den spezifizierten Eigenschaften nicht gefunden, da nicht die gesamte Filterbedingung oder nicht alle unverzichtbaren Elemente der Filterbedingung erfüllt sind, so ist der vorstehend beschriebene Fall eingetreten, in dem eine Mißerfolgsmeldung von dem Nutzer erwartet wird. Insbesondere ist eine Mißerfolgsmeldung sinnvoll, die auf die einzelnen nicht erfüllten Auswahlbedingungen bzw. deren logische Verkettung Bezug nimmt.

Bekannt sind Datenbanksysteme, die in diesem Fall lediglich die Mißerfolgsmeldung ausgeben, daß keine der Filterbedingung entsprechenden Daten gefunden wurden. Eine Spezifizierung, welche Auswahlbedingung bzw. welche Auswahlbedingungen nicht erfüllt sind und in erster Line für das Nichtauffinden der Daten die Ursache bilden, ist bei den bekannten Datenbanksystemen nicht möglich.

Aufgabe der vorliegenden Erfindung ist es, ein Verfahren der eingangs genannten Art bereitzustellen, bei dem eine aus den nicht erfüllten Auswahlbedingungen und/oder deren logischer Verkettung abgeleitete Mißerfolgsmeldung ausgebbar ist.

Die Aufgabe wird durch ein Verfahren mit den Merkmalen des Anspruchs 1 gelöst. Weiterbildungen sind Gegenstand der abhängigen Ansprüche.

Gemäß einem Kerngedanken der Erfindung wird den Auswahlbedingungen jeweils ein Mißerfolgsgewicht zugeordnet. Im Fall einer nicht erfüllten oder in unverzichtbaren Teilen nicht erfüllten Filterbedingung wird weiterhin die für den Mißerfolg wichtigste erfüllte Auswahlbedinbgung und/oder das zugeordnete maßgebliche Mißerfolgsgewicht ermittelt. Dabei wird die logische Verkettung der Auswahlbedingungen berücksichtigt und wird ein Vergleich der Mißerfolgsgewichte durchgeführt. Als Resultat wird eine Mißerfolgsmeldung abgeleitet und ausgegeben. Insbesondere ist es möglich, daß der Nutzer einzelne oder alle Mißerfolgsgewichte der Auswahlbedingungen jeweils zu einer Filterbedingung spezifiziert. Die Mißerfolgsmeldung gibt insbesondere einfach die unverzichtbare Auswahlbedingung mit dem maßgeblichen Mißerfolgsgewicht wieder, die bei dem versuchten Datenbankzugriff nicht erfüllt ist. Vorzugsweise jedoch findet eine weitere Aufbereitung der Information aus dem ermittelten maßgeblichen Mißerfolgsgewicht statt, so daß dem Nutzer Informationen vermittelt werden, wie er eine erfolgreiche Datenbankabfrage zu formulieren hat.

Bei einer Weiterbildung des Verfahrens werden außer dem maßgeblichen Mißerfolgsgewicht bzw. der wichtigsten nicht erfüllten Auswahlbedingung auch ein oder mehrere andere Mißerfolgsgewichte bzw. weniger wichtige Mißerfolgsgewichte von nicht erfüllten Auswahlbedingungen bei der Ausgabe der Mißerfolgsmeldung berücksichtigt.

Vorzugsweise werden als Mißerfolgsgewichte die Elemente einer geordneten Menge, insbesondere der Menge der positiven ganzen Zahlen inklusive der Zahl Null, den Auswahlbedingungen zugeordnet. Insbesondere wird die Zahl Null dann einer Auswahlbedingung zugeordnet, wenn diese erfüllt ist. Wenn die Auswahlbedingung nicht erfüllt ist, wird jedoch ein für das Datenbanksystem dauerhaft vorgegebenes oder für die einzelne Filterbedingung spezifiziertes Element der geordneten Menge zugeordnet.

In bestimmter Ausgestaltung wird den Auswahlbedingungen eineindeutig jeweils ein positives Mißerfolgsgewicht zugeordnet oder, bei Erfüllung der jeweiligen Auswahlbedingung, das Mißerfolgsgewicht Null zugeordnet. Die eineindeutige Zuordnung eines Mißerfolgsgewichts im Fall der Nichterfüllung der jeweiligen Auswahlbedingung hat den Vorteil, daß die Auswahlbedingung wiederum anhand eines im Vergleich der Mißerfolgsgewichte ermittelten maßgeblichen Mißerfolgsgewichts eindeutig identifizierbar ist. Dies erleichtert beispielsweise die Angabe der nicht erfüllten Auswahlbedingung bei der Ausgabe der Mißerfolgsmeldung.

In alternativer Ausgestaltung kann jeweils einer Mehrzahl von Auswahlbedingungen, nach denen beispielsweise bei der Ausgabe der Mißertolgsmeldung nicht unterschieden werden muß, jeweils dasselbe Mißerfolgsgewicht zugeordnet werden.

Vorteilhafterweise wird eine Filterbedingung, die als logischen Operator den Negationsoperator enthält, umgeformt, so daß sie statt der negierten Auswahlbedingung bzw. der negierten Auswahlbedingungen eine entsprechende oder mehrere entsprechende invertierte Auswahlbedingungen enthält. Insbesondere können der invertierten und der zugehörigen nicht invertierten Auswahlbedingung dem Betrag nach gleiche Mißerfolgsgewichte zugeordnet werden, die jedoch entgegengesetzte Vorzeichen haben. Die Invertierung richtet sich nach den bekannten Regeln der Boolschen Algebra. Beispielsweise lautet die Invertierung des Ausdrucks
¬ ( A & B ) → ( ^A # ^B ),
wobei → die Umformung in die invertierte Formulierung bedeutet, wobei ¬ den Negationsoperator darstellt, wobei A, B Auswahlbedingungen darstellen, wobei & für den Undoperator steht, wobei # für den Oderoperator steht und wöbei durch die Klammerung die Reihenfolge der Auswertung des logischen Ausdrucks festgelegt ist. Die Definition einer invertierten Auswahlbedingung ist von der Art der Auswahlbedingung abhängig. Beispielsweise bei einer Auswahlbedingung, die fordert, daß ein Attribut eines Datensatzes, welches einen numerischen Wert hat, größer als ein bestimmter numerischer Wert ist,
A: a > 12,
lautet die Invertierung
^A: a ≤ 12,
wobei a ein bestimmtes Attribut von Daten bzw. Datensätzen bezeichnet. Es ist bekannt, daß Daten bzw. Datensätze mehrere Attribute haben können, die auch andere als numerische Attribute sein können. Beispielsweise können Attribute die Zugehörigkeit der Daten zu einer Datenmenge als Mengenelement oder Teilmenge bezeichnen. Weiterhin ist bekannt, mit Hilfe von numerischen Attributen funktionale Ausdrücke wie Linearkombinationen aus mehreren Attributen zu bilden, die dann beispielsweise über einen relationalen Operator mit einem numerischen Wert verglichen werden, wobei die so gebildete Relation eine Auswahlbedingung darstellt.

Bevorzugtermaßen weist die Filterbedingung eine mit dem Undoperator der Boolschen Algebra verknüpfte Auswahlbedingung und/oder einen damit verknüpften Ausdruck mit Auswahlbedingungen auf und ist bei dem Vergleich der Mißerfolgsgewichte das Maximum der jeweiligen Mißerfolgsgewichte der so verknüpften Auswahlbedingungen bzw. Ausdrücke maßgeblich. Falls beide mit dem Undoperator verknüpften Bedingungselemente (Auswahlbedingung, Ausdruck) der Filterbedingung nicht erfüllt sind, wird also das Maximum der Mißerfolgsgewichte der beiden Bedingungselemente als Mißerfolgsgewicht ihrer Verknüpfung behandelt. Es kann somit auf einfache Weise durch Ermittlung des Maximums das maßgebliche Mißerfolgsgewicht der Verknüpfung bestimmt werden. Vorzugsweise wird entsprechend verfahren, wenn mehr als zwei Bedingungselemente mit Undoperatoren zu einem logischen Ausdruck verkettet sind.

Bei einer Weiterbildung weist die Filterbedingung eine mit dem Oderoperator verknüpfte Auswahlbedingung und/oder einen damit verknüpften Ausdruck mit Auswahlbedingungen auf und ist bei dem Vergleich der Mißerfolgsgewichte das Minimum der jeweiligen Mißerfolgsgewichte der so verknüpften Auswahlbedingungen bzw. Audrücke maßgeblich. Vorzugsweise ist bei mehr als zwei durch Oderoperatoren verkettete Bedingungselementen das Minimum aller zugeordneten Mißerfolgsgewichte dieser Bedingungselemente maßgeblich.

Bei noch einer Weiterbildung wird bei der Ermittlung des maßgeblichen Mißerfolgsgewichts ein logischer Ausdruck ausgewertet, der die gleiche logische Struktur wie die Filterbedingung hat, wobei jedoch die Auswahlbedingungen durch deren zugeordnete Mißerfolgsgewichte und die logischen Operatoren Undoperator und Oderoperator durch den Maximumoperator bzw. den Minimumoperator ersetzt sind. Der Maximum- bzw. Minimumoperator ist also auf die Mißerfolgsgewichte der mit dem entsprechenden Undoperator bzw. Oderoperator verknüpften Bedingungselemente der Filterbedingung anzuwenden. Vorzugsweise enthält die Filterbedingung als Boolsche Operatoren lediglich den Inversionsoperator, den Undoperator und den Oderoperator, so daß sich ein dementsprechender logischer Ausdruck für die Ermittlung des maßgeblichen Mißerfolgsgewichts ergibt, in dem als Operatoren lediglich der Maximumoperator und der Minimumoperator vorkommen können und in dem invertierte Auswahlbedingungen jeweils durch ein zugeordnetes Mißerfolgsgewicht repräsentiert werden.

Im Fall einer Filterbedingung, die bei einer Mehrzahl von Datensätzen des Datenbanksystems nicht erfüllt ist, wird vorzugsweise für jeden der Datensätze das jeweils maßgebliche Mißerfolgsgewicht ermittelt und wird als ingesamt maßgebliches Mißerfolgsgewicht das Minimum der jeweils maßgeblichen Mißerfolgsgewichte ermittelt. Wie auch bei der Anwendung des Maximumoperators und/oder des Minimumoperators im Fall von mit dem Undoperator bzw. dem Oderoperator verknüpften Auswahlbedingungen findet diese Vorgehensweise ihre Rechtfertigung in der Tatsache, daß die Nichterfüllung einer Auswahlbedingung bzw. einer Filterbedingung nur dann für den Mißerfolg bei dem versuchten Zugriff auf die Daten verantwortlich bzw. wichtig ist, wenn die Auswahlbedingung unverzichtbar erfüllt sein muß. Bei mehreren verletzten, mit dem Oderoperator verknüpften Auswahlbedingungen bzw. bei für mehrere Datensätze verletzten Filterbedingungen wäre der Mißerfolg bereits dann nicht eingetreten, wenn eine der Auswahlbedingungen bzw. die Filterbedingung für einen Datensatz erfüllt wäre. Für den Erfolg beim Datenzugriff hätte also bereits die Erfüllung der Auswahlbedingung mit dem kleinsten Mißerfolgsgewicht bzw. die Erfüllung der Filterbedingung für den Datensatz mit dem kleinsten maßgeblichen Mißerfolgsgewicht ausgereicht.

Es ist bekannt, bei versuchten Datenbankzugriffen Filterbedingungen nur teilweise auszuwerten. Die Auswertung wird üblicherweise dann abgebrochen, wenn ihr Ergebnis sicher feststeht. In manchen Fällen sind dann auch ausreichend viele Auswahlbedingungen ausgewertet, um das maßgebliche Mißerfolgsgewicht ermitteln zu können. In anderen Fällen reicht aber die Information zur Ermittlung des maßgeblichen Mißerfolgsgewichts noch nicht aus. Bei einer Weiterbildung des Verfahrens wird die Auswertung der Auswahlbedingungen in jedem Fall so lange fortgesetzt, bis die zur Ermittlung des maßgeblichen Mißerfolgsgewichts der Filterbedingung erforderlichen Mißerfolgsgewichte ermittelt sind. Vorzugsweise wird die Filterbedingung vor und/oder während ihrer Auswertung derart umgeformt, daß das maßgebliche Mißerfolgsgewicht bereits dann ermittelbar ist, wenn das Ergebnis der Auswertung der Filterbedingung feststeht, oder eine möglichst geringe Anzahl von weiteren Auswahlbedingungen ausgewertet werden muß, um das maßgebliche Mißerfolgsgewicht zu ermitteln. Bei der Umformung bzw. den Umformungen ist jedoch auch zu berücksichtigen, daß u.U. der Aufwand für die Auswertung der Filterbedingung zunimmt. Daher wird eine Ausgestaltung des Verfahrens bevorzugt, bei der der Gesamtaufwand für die Auswertung der Auswahlbedingungen, für die Umformung der Filterbedingung und für die Ermittlung des maßgeblichen Mißerfolgsgewichts minimiert wird.

Bei einer ebenfalls bevorzugten Ausgestaltung des erfindungsgemäßen Verfahrens wird eine erste Abschätzung des maßgeblichen Mißerfolgsgewichts der Filterbedingung vorgenommen, bei der die noch nicht ausgewerteten Auswahlbedingungen als erfüllt angenommen werden, wird eine zweite Abschätzung des maßgeblichen Mißerfolgsgewichts der Filterbedingung vorgenommen, bei der die noch nicht ausgewerteten Auswahlbedingungen als nicht erfüllt angenommen werden, und wird die Auswertung der Auswahlbedingungen erst dann abgebrochen, wenn die erste und die zweite Abschätzung das gleiche Ergebnis liefern. Durch einfachen Vergleich der momentanen Ergebnisse der ersten und der zweiten Abschätzung kann somit jeweils nach Auswertung einer Auswahlbedingung bzw. mehrerer Auswahlbedingungen zuverlässig festgestellt werden, ob noch weitere Auswahlbedingungen ausgewertet werden müssen.

Bei einer Weiterbildung weist die Filterbedingung zumindest eine Verknüpfung mit zwei Bedingungselementen auf, die jeweils eine Auswahlbedingung oder ein Ausdruck mit logisch verknüpften Auswahlbedingungen sind, wobei die Bedingungselemente mit dem Undoperator miteinander verknüpft sind, und wird das Bedingungselement mit dem bei seiner Nichterfüllung größeren Mißerfolgsgewicht zuerst ausgewertet. Im Fall der Nichterfüllung des Bedingungselements mit dem größeren Mißerfolgsgewicht kann daher auf die Auswertung des Bedingungselements mit dem kleineren (oder gleich großen) Mißerfolgsgewicht verzichtet werden. Entsprechendes gilt für eine Verkettung von mehr als zwei Bedingungselementen mit Undoperatoren.

Wenn die Filterbedingung zumindest eine Verknüpfung mit zwei Bedingungselementen aufweist, die jeweils eine Auswahlbedingung oder ein Ausdruck mit logisch verknüpften Auswahlbedingungen sind, wobei die Bedingungselemente mit dem Oderoperator miteinander verknüpft sind, wird vorzugsweise der Verknüpfung bereits vor oder während ihrer Auswertung für den Fall ihrer Nichterfüllung das kleinere Mißerfolgsgewicht der Bedingungselemente zugeordnet. Auf diese Weise kann die Struktur des logischen Ausdrucks zur Bestimmung des maßgeblichen Mißerfolgsgewichts vereinfacht werden. Für die Auswertung der Filterbedingung ist es jedoch im Fall des Mißerfolgs unerläßlich, beide Bedingungselemente auszuwerten. Entsprechendes gilt für Verknüpfungen mit mehr als zwei durch Oderoperatoren verkettete Bedingungselementen. Hier sind im Fall des Mißerfolgs dann alle so verketteten Bedingungselemente auszuwerten.

Erfindungsgemäß wird den Auswahlbedingungen jeweils ein Mißerfolgsgewicht zugeordnet. Bei erfolglosem Zugriff auf Daten des Datenbanksystems können jedoch auch andere Mißerfolgsereignisse als nicht erfüllte Auswahlbedingungen eintreten, über die ein Nutzer informiert werden sollte. Beispielsweise kann in einer Datenbank kein einziger Datensatz vorhanden sein. Bei einer Weiterbildung des Verfahrens wird daher auch zumindest einem anderen Mißerfolgsereignis als einer einzigen nicht erfüllten Auswahlbedingung oder einem Ausdruck mit Auswahlbedingungen ein Mißerfolgsgewicht zugeordnet.

Die Erfindung wird nun anhand von Ausführungsbeispielen auch im Hinblick auf weitere erfindungswesentliche Merkmale und Vorteile näher erläutert. Die Erfindung ist jedoch nicht auf diese Ausführungsbeispiele beschränkt.

### Ausführungsbeispiel 1:

Bei einem versuchten Datenbankzugriff wird die folgende Filterbedingung gestellt:
( A & B ) & ( ¬(C & D ) ) & ( ¬E # (F & ¬G & H) # (I & J ) )
hierbei bedeuten
- ¬ :: Negationsoperator
- & :: Undoperator
- # :: Oderoperator
- ( ) :: Klammerung zur Festlegung der Reihenfolge bei der Auswertung
- A..J:: Auswahlbedingungen

Die Filterbedingung wird zunächst durch Umformung unter Beachtung der Booleschen Umformungsregeln in eine Form gebracht, die frei von dem Negationsoperator ist:
( A # B ) & ( ^C # ^D ) & ( ^E # (F & ^G & H) # ( I & J ) )

Durch Vorgaben des Nutzers, der die Filterbedingung gestellt hat, sind den Auswahlbedingungen A...J für den Fall ihrer Nichterfüllung positive ganze Zahlen als Mißerfolgsgewichte zugeordnet. Das Datenbanksystem enthält darüber hinaus vorgegebene Regeln, wie aus der Vorgabe eines Mißerfolgsgewichts für eine Auswahlbedingung ein Mißerfolgsgewicht für die entsprechende invertierte Auswahlbedingung ermittelt wird. Im einfachsten Fall haben die Auswahlbedingung und die zugehörige invertierte Auswahlbedingung dasselbe Mißerfolgsgewicht für den Fall ihrer Nichterfüllung. Für den Fall der Erfüllung des Mißerfolgsgewichts wird den Auswahlbedingungen die Zahl Null zugeordnet. Bei einer Alternative wird der invertierten Auswahlbedingung jeweils dem Betrag das gleiche Mißerfolgsgewicht zugeordnet wie der zugehörigen nicht invertierten Auswahlbedingung, jedoch mit negativem Vorzeichen. Entsprechend wird für den Fall der Erfüllung jeweils eine fest vorgegebene negative Zahl zugeordnet, deren Betrag größer ist als jede andere als Mißerfolgsgewicht zugeordnete Zahl. In jedem Fall sind alle Mißerfolgsgewichte Elemente einer geordneten Menge und ist das Mißerfolgsgewicht im Fall der Erfüllung kleiner als alle Mißerfolgsgewichte im Fall der Nichterfüllung.

Die umgeformte Filterbedingung enthält insgesamt drei Ausdrücke mit mehreren Auswahlbedingungen, die mit dem Undoperator miteinander verkettet sind. In dem dritten, zuletzt auszuwertenden der drei Ausdrücke kommen weitere Ausdrücke vor, die jeweils eine, drei bzw. zwei Auswahlbedingungen enthalten, wobei die weiteren Ausdrücke durch den Oderoperator miteinander verknüpft sind. Gemäß der durch die Umklammerung vorgegebenen Auswertungsreihenfolge wird zuerst der Ausdruck mit den Auswahlbedingungen A, B ausgewertet, anschließend der Ausdruck mit den Auswahlbedingungen ^C, ^D und zuletzt der Ausdruck mit den Auswahlbedingungen ^E...J. In dem letzten Teilausdruck des dritten Ausdrucks sind die Auswahlbedingungen I, J mit dem Undoperator miteinander verknüpft. Bei der Auswertung der Filterbedingung wird jede einzelne Auswahlbedingung ausgewertet, so daß nach der Auswertung die Werte der den Auswahlbedingungen jeweils zugeordneten Mißerfolgsgewichte feststehen. Dabei wird die Filterbedingung für insgesamt drei Datensätze S1, S2, S3 angewendet. Die Fehlergewichte im Fall der Nichterfüllung der einzelnen Auswahlbedingungen lauten:

| A | B | ^C | ^D | ^E | F | ^G | H | I | J |
|---|---|---|---|---|---|---|---|---|---|
| 1 | 8 | 2 | 7 | 9 | 3 | 6 | 10 | 4 | 5 |

Zur Ermittlung des maßgeblichen Mißerfolgsgewichts wird nun ein numerischer Ausdruck ausgewertet, der dieselbe Struktur wie die umgeformte Filterbedingung hat, wobei jedoch die Auswahlbedingungen durch deren zugeordnete Mißerfolgsgewichte und die logischen Operatoren durch den Maximumoperator M bzw. den Minimumoperator m ersetzt sind. Als Bezeichnung für die Mißerfolgsgewichte der einzelnen Auswahlbedingungen und der einzelnen invertierten Auswahlbedingungen wird der jeweils entsprechende Kleinbuchstabe verwendet. Der auszuwertende Ausdruck lautet:
( a m b ) M ( c m d ) M (e m ( f M g M h ) m ( i M j ) )

Die Filterbedingung wird bei drei Datensätzen S1, S2, S3 des Datenbanksystems angewendet. Die Ergebnisse bei der Durchsuchung der Datensätze S1, S2 und S3 lauten:

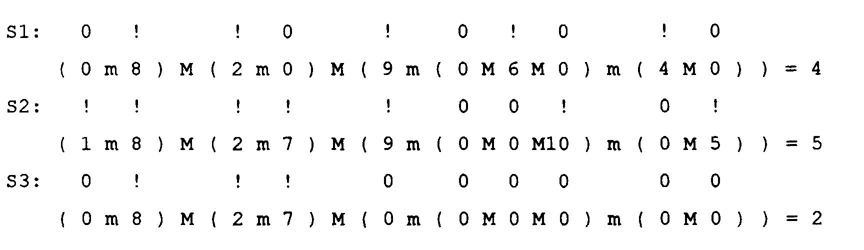

Hierbei bedeutet "0", daß bei der Durchsuchung des jeweiligen Datensatzes S1, S2, S3 die jeweilige Auswahlbedingung erfüllt ist, und bedeutet "!", daß die jeweilige Auswahlbedingung nicht erfüllt ist. Als insgesamt maßgebliches Mißerfolgsgewicht für den versuchten Zugriff auf die drei Datensätze S1, S2, S3 des Datenbanksystems wird das Minimum der jeweils maßgeblichen Mißerfolgsgewichte 4, 5 bzw. 2 ermittelt. Das insgesamt maßgebliche Mißerfolgsgewicht ist demnach 2. Daraufhin erfolgt als Information für den Nutzer, der die Filterbedingung gestellt hat, die Mitteilung, daß kein Datensatz ermittelt werden konnte, weil als wichtigste nicht erfüllte Auswahlbedingung die Auswahlbedingung ^C nicht erfüllt ist. Weiterhin wird dem Nutzer empfohlen, erneut eine Filterbedingung aufzustellen, bei der jedoch gegenüber der zuerst gestellten Filterbedingung die Auswahlbedingung C fehlt oder durch andere Auswahlbedingung mit geringerer Einschränkungswirkung ersetzt ist.

### Ausführungsbeispiel 2:

Dieses Ausführungsbeispiel betrifft Datenbanksysteme mit sogenannter optimierter Auswertung einer zusammengesetzten Filterbedingung, bei der die Auswertung der einzelnen Auswahlbedingungen abgebrochen wird, wenn das Ergebnis der Auswertung der Filterbedingung feststeht. Die Filterbedingung F lautet:
F = A & B & C & D,
hierbei sind den einzelnen Auswahlbedingungen für den Fall ihrer Nichterfüllung die folgenden Mißerfolgsgewichte zugeordnet:
5 7 3 2

Da die Auswahlbedingungen der Reihe nach von links nach rechts ausgewertet werden, kann es vorkommen, daß die Auswahlbedingung A bereits nicht erfüllt ist, so daß feststeht, daß die Filterbedingung insgesamt nicht erfüllt ist. Jede der mit dem Undoperator verknüpften Auswahlbedingungen A...D muß jedoch zwingend erfüllt sein, damit die gesamte Filterbedingung F erfüllt ist. Andererseits soll als maßgebliches Mißerfolgsgewicht das Mißerfolgsgewicht der nicht erfüllten, unverzichtbaren Auswahlbedingung mit dem größten zugeordneten Mißerfolgsgewicht ermittelt werden. Um dies sicherzustellen, sind die mit dem Undoperator verknüpften Auswahlbedingungen A...D der Größe ihrer Mißerfolgsgewichte nach absteigend anzuordnen. Die Filterbedingung wird daher wie folgt umgeformt:
F = B & A & C & D
so daß die Reihenfolge der Mißerfolgsgewichte im Fall des Nichteintretens der Auswahlbedingungen lautet:
7 5 3 2

Im vorliegenden Fall ist die Auswahlbedingung B erfüllt, wohingegen die Auswahlbedingung A nicht erfüllt ist. Bei der Auswertung der Filterbedingung F wird daher nach der Auswertung der Filterbedingung B abgebrochen. Der auszuwertende numerische Ausdruck für die Bestimmung des maßgeblichen Mißerfolgsgewichts lautet daher:
0 M 5 M (0,3) M (0,2),
wobei der Ausdruck (0,x) bedeutet, daß für die entsprechende nicht ausgewertete Auswahlbedingung C, D jeweils das Mißerfolgsgewicht 0 (im Fall ihrer Erfüllung) oder x (im Fall ihrer Nichterfüllung) in Frage kommt. Da jedoch das Maximum aller Beiträge der mit dem Undoperator verknüpften Auswahlbedingungen zu dem Mißerfolgsgewicht zu ermitteln ist, steht unabhängig von der Auswertung der Auswahlbedingungen C und D fest, daß das Ergebnis 5 lautet.

### Ausführungsbeispiel 3:

Bei einem versuchten Zugriff auf Daten eines Datenbanksystems wird die Filterbedingung gestellt:
G & ( (A & B) # (C & D) # (E & F) ),
wobei im Falle der Nichterfüllung aller Auswahlbedingungen A...E der folgende numerische Ausdruck bei der Bestimmung des maßgeblichen Mißerfolgsgewichts auszuwerten wäre:
3 M ( (5 M 1) m (6 M 2) m (7 M 4) ).

Da das Ergebnis der umklammerten logischen Verkettung der Auswahlbedingungen A...F nicht von vornherein feststeht, ist vor der Auswertung der Filterbedingung nicht bekannt, ob der umklammerte Ausdruck oder die Auswahlbedingung G das größere Mißerfolgsgewicht haben. Andererseits ist es bei der optimierten Auswertung der Filterbedingung möglich, daß die Nichterfüllung der Filterbedingung bereits nach Auswertung der Auswahlbedingung G feststeht. Die Filterbedingung wird daher wie folgt umgeformt:
(A & G & B) # (C & G & D) # (E & F & G),
wobei dann der folgende numerische Ausdruck im Fall der Nichterfüllung aller Auswahlbedingungen A...G auszuwerten ist:
(5 M 3 M 1) m (6 M 3 M 2) m (7 M 4 M 3).

Nach der Umformung ist gewährleistet, daß bei vorzeitig feststehendem Ergebnis der Filterbedingung auch gleichzeitig ausreichend Informationen vorhanden sind, um das maßgebliche Mißerfolgsgewicht korrekt zu bestimmen. Innerhalb der umklammerten Ausdrücke sind dazu die mit dem Undoperator bzw. entsprechend mit dem Maximumoperator M verknüpften Elemente nach der Größe der Mißerfolgsgewichte in absteigender Reihenfolge geordnet.

In dem vorliegenden Ausführungsbeispiel bedeutet jedoch der vorzeitige Abbruch der Auswertung der umklammerten Ausdrücke, beispielsweise nach dem 2. umklammerten Ausdruck, daß die Filterbedingung erfüllt ist. Eine Auswertung der Mißerfolgsgewichte ist daher nicht erforderlich, wenn bei einer Auswertung auch anhand des Mißerfolgsgewichts zusammen mit den ausgewählten Daten begleitende Informationen an den Nutzer übermittelt werden können. Durch die Umformung erhöht sich u.U. der Rechenaufwand bei der Auswertung der Filterbedingung, so daß sich die Umformung hinsichtlich des Aufwandes u.U. nicht lohnt.

### Ausführungsbeispiel 4:

Aus den vorstehend genannten Gründen wird ein modifiziertes Verfahren der optimierten Auswertung von Filterbedingungen vorgeschlagen. Die Filterbedingung lautet:
( (A & B) # (C & D) # (E & F) ) & G.

Nun werden bei der Auswertung der Filterbedingung zwei Abschätzungen des maßgeblichen Mißerfolgsgewichts der Filterbedingung vorgenommen, wobei bei der ersten Abschätzung die noch nicht ausgewerteten Auswahlbedingungen als erfüllt angenommen werden und wobei bei der zweiten Abschätzung die noch nicht ausgewerteten Auswahlbedingungen als nicht erfüllt angenommen werden. Nach Auswertung der Auswahlbedingungen A, D, F erbringen die beiden Annäherungen beispielsweise die folgenden Ergebnisse, wobei im Fall des Nichteintretens der Auswahlbedingungen A...G die folgenden Mißerfolgsgewichte zugeordnet werden:

| A | B | C | D | E | F | G |
|---|---|---|---|---|---|---|
| 5 | 1 | 6 | 2 | 7 | 4 | 3 |

wobei der Übersichtlichkeit wegen die noch nicht untersuchten Auswahlbedingungen mit einem "?" bezeichnet werden und die nicht erfüllten Auswahlbedingungen mit einem "!" bezeichnet werden und wobei die erfüllten Auswahlbedingungen mit einer "0" bezeichnet werden, so daß der Auswertungszustand wie folgt symbolisiert wird:
0 ? ? ! ? 0 ?

Die Ergebnisse der ersten Abschätzung für diesen Auswertungszustand lauten:
( (0 M 0) m (0 M 2) m (0 M 0) ) M 0 = 0

Die zweite Annäherung für diesen Auswertungszustand lautet:
( (0 M 1) m (6 M 2) m (7 M 0) ) M 3 = 3

Die beiden Abschätzungen liefern in dem betrachteten Auswertungszustand unterschiedliche Ergebnisse, so daß die Auswertung der Filterbedingung fortzusetzen ist. In einem späteren Auswertungszustand, der folgendermaßen symbolisiert wird 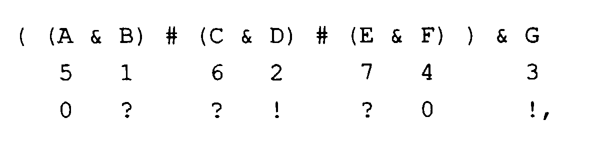 lautet die erste Abschätzung:
( (0 M 0) m (0 M 2) m (0 M 0) ) M 3 = 3
und lautet die zweite Abschätzung:
( (0 M 1) m (6 M 2) m (7 M 0) ) M 3 = 3,
so daß das übereinstimmende Ergebnis der beiden Abschätzungen, nämlich 3 für das maßgebliche Mißerfolgsgewicht feststeht. Gleichzeitig bedeutet die Übereinstimmung der Ergebnisse der ersten und der zweiten Abschätzung, daß die Auswertung der Filterbedingung abgebrochen werden kann.

### Ausführungsbeispiel 5:

Das erfindungsgemäße Verfahren ist insbesondere in der Daten-Vermittlungstechnik anwendbar. Im vorliegenden Beispiel stehen einem Nutzer eines Datennetzes zwei Verbindungswege zur Datenübertragung zur Verfügung. Das Ausführungsbeispiel beschränkt sich aus Gründen der einfacheren Darstellung auf zwei mögliche Verbindungswege. In der Praxis stehen üblicherweise eine Vielzahl möglicher Verbindungswege zur Verfügung. Der Nutzer möchte Daten von München nach Hamburg übertragen. Einer der beiden zur Verfügung stehenden Verbindungswege führt ohne Unterbrechung bzw. ohne Knotenpunkte direkt von München nach Hamburg. Der zweite Verbindungsweg führt von München über einen Knotenpunkt in Frankfurt nach Hamburg. Beide Verbindungswege haben bestimmte Eigenschaften, die sich beispielsweise aus der Hardware und/oder der Software von Vermittlungsstellen sowie aus Art der Übertragungsleitungen ergeben, über die die Verbindungswege hergestellt sind bzw. hergestellt werden können. Den Eigenschaften entsprechen in einem Datenbanksystem Attribute, für die in Datensätzen der jeweiligen Verbindung bestimmte Werte abgelegt sind. Der Nutzer stellt folgende Filterbedingung F:
F = A & B & C.
Hierbei bedeuten:
- A:: Daten-Übertragungsrate in Vorwärtsrichtung ≥ 2 Mbit/s
- B:: Daten-Übertragungsrate in Rückwärtsrichtung ≥ 64 kbit/s
- C:: Verzögerungszeit bei der Datenübertragung in Vorwärtsrichtung ≤ 100 ms

Diese Filterbedingung stellt der Nutzer beim versuchten Zugriff auf die Datensätze, d.h. bei der Anforderung eine Daten-Übertragungsverbindung aufzubauen. Daraufhin durchsucht das Datenbanksystem die Datensätze und überprüft, ob für die Datensätze die Filterbedingung erfüllt ist.

Das Datenbanksystem stellt fest, daß für den ersten Verbindungsweg, d.h. für den ersten Datensatz, die Auswahlbedingung A nicht erfüllt ist, weil der erste Verbindungsweg Daten nur mit einer Daten-Übertragungsrate von 1,5 Mbit/s übertragen kann. Weiterhin stellt das Datenbanksystem fest, daß der weite Verbindungsweg nur bei einer Verzögerungszeit in Vorwärtsrichtung von 150 ms betrieben werden kann. Folglich ist für den zweiten Verbindungsweg die Auswahlbedingung C nicht erfüllt.

Als Mißerfolgsgewichte sind für den Fall ihrer Nichterfüllung der Auswahlbedingung A der Wert 3 und der Auswahlbedingung C der Wert 2 zugeordnet. Wegen der logischen Verkettung der Auswahlbedingungen in der Filterbedingung F mit dem Undoperator muß jede der Auswahlbedingungen bei dem jeweiligen Verbindungsweg bzw. dessen Datensatz erfüllt sein. Als maßgebliches Mißerfolgsgewicht für den ersten Verbindungsweg wird daher 3 ermittelt. Als maßgebliches Mißerfolgsgewicht für den zweiten Verbindungsweg wird 2 ermittelt. Das resultierende bzw. insgesamt maßgebliche Mißerfolgsgewicht ist das Minimum der jeweils maßgeblichen Mißerfolgsgewichte, nämlich das Mißerfolgsgewicht 2 der Auswahlbedingung C. Als Mißerfolgsmeldung erhält der Nutzer daher die Antwort des Datenbanksystems, daß als wichtigste nicht erfüllte Auswahlbedingung die Auswahlbedingung C verletzt sei, da der entsprechende Verbindungsweg nur bei einer Verzögerungszeit in Vorwärtsrichtung von 150 ms betrieben werden kann.

Daraufhin ändert der Nutzer die Filterbedingung F dahingehend, daß er die Auswahlbedingung C durch die Auswahlbedingung C' ersetzt:
C': Verzögerungszeit in Vorwärtsrichtung ≤ 200 ms

Ansonsten ändert der Nutzer die Filterbedingung F nicht. Als Antwort auf seine erneute Anforderung, eine Verbindung unter der gestellten Filterbedingung herzustellen, erhält er die Antwort, daß eine gewünschte Verbindung über den zweiten Verbindungsweg zur Verfügung gestellt werden kann. Weiterhin erhält der Nutzer zu den gestellten Auswahlbedingungen die entsprechenden Eigenschaften des Verbindungsweges.

## Patentansprüche

1. Verfahren zur Ausgabe einer Mißerfolgsmeldung bei einem versuchten Zugriff auf Daten eines Datenbanksystems,
- wobei dem Datenbanksystem eine aus einer Mehrzahl von logisch verketteten Auswahlbedingungen zur Spezifizierung von Ausgabedaten zusammengesetzte Filterbedingung gestellt wird,
- wobei den Auswahlbedingungen jeweils ein Mißerfolgsgewicht zugeordnet wird und
- wobei bei der nicht erfüllten Filterbedingung die, unter Berücksichtigung der logischen Verkettung der Auswahlbedingungen, anhand eines Vergleichs der Mißerfolgsgewichte für den Mißerfolg wichtigste nicht erfüllte Auswahlbedingung und/oder das zugeordnete maßgebliche Mißerfolgsgewicht ermittelt wird und eine daraus abgeleitete Mißerfolgsmeldung ausgegeben wird.

2. Verfahren nach Anspruch 1,
wobei als Mißerfolgsgewichte die Elemente einer geordneten Menge, insbesondere der Menge der positiven ganzen Zahlen inklusive der Zahl Null, den Auswahlbedingungen zugeordnet werden.

3. Verfahren nach Anspruch 1 oder 2,
wobei den Auswahlbedingungen eineindeutig jeweils ein positives Mißerfolgsgewicht zugeordnet wird oder, bei Erfüllung der jeweiligen Auswahlbedingung, das Mißerfolgsgewicht Null zugeordnet wird.

4. Verfahren nach einem der Ansprüche 1 bis 3,
wobei die Filterbedingung als logischen Operator den Negationsoperator enthält und wobei die Filterbedingung umgeformt wird, so daß sie statt der negierten Auswahlbedingung oder Auswahlbedingungen eine entsprechende oder mehrere entsprechende invertierte Auswahlbedingungen enthält.

5. Verfahren nach einem der Ansprüche 1 bis 4,
wobei die Filterbedingung eine mit dem Undoperator verknüpfte Auswahlbedingung und/oder einen damit verknüpften Ausdruck mit Auswahlbedingungen aufweist und wobei bei dem Vergleich der Mißerfolgsgewichte das Maximum der jeweiligen Mißerfolgsgewichte der so verknüpften Auswahlbedingungen bzw. Ausdrücke maßgeblich ist.

6. Verfahren nach einem der Ansprüche 1 bis 5,
wobei die Filterbedingung eine mit dem Oderoperator verknüpfte Auswahlbedingung und/oder einen damit verknüpften Ausdruck mit Auswahlbedingungen aufweist und wobei bei dem Vergleich der Mißerfolgsgewichte das Minimum der jeweiligen Mißerfolgsgewichte der so verknüpften Auswahlbedingungen bzw. Ausdrücke maßgeblich ist.

7. Verfahren nach Anspruch 5 und 6,
wobei bei dem Vergleich der Mißerfolgsgewichte ein logischer Ausdruck ausgewertet wird, der die gleiche logische Struktur wie die Filterbedingung hat, wobei jedoch die Auswahlbedingungen durch deren zugeordnete Mißerfolgsgewichte und die logischen Operatoren durch den Maximumoperator bzw. den Minimumoperator ersetzt sind.

8. Verfahren nach einem der Ansprüche 1 bis 7,
wobei die Filterbedingung bei einer Mehrzahl von Datensätzen des Datenbanksystems nicht erfüllt ist, wobei für jeden der Datensätze das jeweils maßgebliche Mißerfolgsgewicht ermittelt wird und wobei als insgesamt maßgebliches Mißerfolgsgewicht das Minimum der jeweiligen maßgeblichen Mißerfolgsgewichte ermittelt wird.

9. Verfahren nach einem der Ansprüche 1 bis 8,
wobei nur ein Teil der Auswahlbedingungen der Filterbedingung ausgewertet bzw. auf Übereinstimmung mit Daten des Datenbanksystems geprüft wird und wobei die Auswertung der Auswahlbedingungen so lange fortgesetzt wird, bis die zur Ermittlung des maßgeblichen Mißerfolgsgewichts erforderlichen Mißerfolgsgewichte ermittelt sind.

10. Verfahren nach Anspruch 9,
wobei eine erste Abschätzung des maßgeblichen Mißerfolgsgewichts vorgenommen wird, bei der die noch nicht ausgewerteten Auswahlbedingungen als erfüllt angenommen werden, wobei eine zweite Abschätzung des maßgeblichen Mißerfolgsgewichts der Filterbedingung vorgenommen wird, bei der die noch nicht ausgewerteten Auswahlbedingungen als nicht erfüllt angenommen werden, und wobei die Auswertung der Auswahlbedingungen erst dann abgebrochen wird, wenn die erste und die zweite Abschätzung das gleiche Ergebnis liefern.

11. Verfahren nach Anspruch 9 oder 10,
wobei die Filterbedingung zumindest eine Verknüpfung mit zwei Bedingungselementen aufweist, die jeweils eine Auswahlbdingung oder ein Ausdruck mit logisch verknüpften Auswahlbedingungen sind, wobei die Bedingungselemente mit dem Undoperator miteinander verknüpft sind, und wobei das Bedingungselement mit dem bei seiner Nichterfüllung größeren Mißerfolgsgewicht zuerst ausgewertet wird.

12. Verfahren nach einem der Ansprüche 9 bis 11,
wobei die Filterbedingung zumindest eine Verknüpfung mit zwei Bedingungselementen aufweist, die jeweils eine Auswahlbedingung oder ein Ausdruck mit logisch verknüpften Auswahlbedingungen sind, wobei die Bedingungselemente mit dem Oderoperator miteinander verknüpft sind und wobei der Verknüpfung vor ihrer Auswertung für den Fall ihrer Nichterfüllung das kleinere Mißerfolgsgewicht der Bedingungselemente zugeordnet wird.

13. Verfahren nach einem der Ansprüche 1 bis 12,
wobei auch zumindest einem anderen Mißerfolgsereignis als einer einzelnen nichterfüllten Auswahlbedingung oder mehreren nicht erfüllten Auswahlbedingungen ein Mißerfolgsgewicht zugeordnet wird.

14. Verfahren nach einem der Ansprüche 1 bis 13,
wobei einzelne oder alle Mißerfolgsgewichte individuell zu den Auswahlbedingungen jeweils einer von mehreren Filterbedingungen spezifizierbar sind.
